# EUROPEAN PATENT SPECIFICATION

(11) **EP 1 185 028 B1**
(45) Date of publication and mention of the grant of the patent: **03.10.2007**
(21) Application number: 00118888.7
(22) Date of filing: 31.08.2000
(51) Int. Cl.: H04L 12/06

(54) **Management of home and history context information in network services**
Verwaltung von Heimat- und Historienkontextinformation in Netzdiensten
Gestion des informations d'historique et d'origine de contexte dans des services de réseau

(43) Date of publication of application: 06.03.2002
(73) Proprietor: Sony Deutschland GmbH, 10785 Berlin (DE)
(72) Inventor: Mandato, Davide, Advanced Techn. Center Stuttgart, Hedelfinger Strasse 61, 70327 Stuttgart (DE); Kovacs, Ernö, Advanced Technology Center Stuttgart, Hedelfinger Strasse 61, 70327 Stuttgart (DE)
(74) Representative: Rupp, Christian

(56) References cited:
- EP-A- 0 611 070
- EP-A- 1 047 253
- WO-A-00/04730
- US-A- 5 832 212

## Description

The present invention generally relates to the field of mobile multimedia middle-ware, computer networking, distributed processing systems, (user profile) databases, handheld computers, web browsers and wireless communication.

More specifically, the present invention relates to a method for managing user profile information in network services, to a computer software program for implementing such a method as well as to a graphical user interface.

From EP 00 104 259.7 in the name of Sony International (Europe) GmbH, filed on March 1, 2000, a technique for conveniently retrieving previously gathered information from a user profile database is known.

User Profile Databases are for example used in messaging services. The service goal of a messaging service is to deliver information as messages sent by a service subscriber to another based on instructions provided by the latter. These instructions can be stored within the system which implements the service and are used for controlling the system to select a called party's preferred terminal device. When selected, the system uses such a terminal device for delivering the calling party's information to the called party. The called party has also the possibility to receive copies of a given incoming message into other terminal devices.

Given that the type of called party's terminal device may differ from the calling party's one the messaging system may be required to undertake proper message format conversion. This information processing can even be further enhanced to the additional functionality, such adding pay-pair-view content to the original information.

Each subscriber of the system is assigned a User Space within the User Profile of the system. Within this kind of personal account subscribers can organize their own preferences (in terms of personal information, of the terminals, applications, and services used, and of the various location/situations where the given services can take place) as it is described in EP 00 104 259.7. Regarding further details of the concept of a user profile database and the management thereof reference is explicitly made to said European patent application 00 104 259.7 in the name of Sony International (Europe) GmbH.

User profiles can be grouped in ordered sets, which will be called context in the following, so as to (i) provide an extensibility mechanism and (ii) leverage default information. In particular, user profiles associated with location and/or situation information can contain a list of preferred Front-End terminals (Front-End Set), where the messages should preferably be sent to.

Document EP 0 611 070 A2 describes a mobile telephone dealing with a plurality of operating characteristics like the volume of an output signal, the ringing volume, and the generation of tones. The mobile telephone comprises means for defining a plurality of groups of said characteristics, wherein each group includes predetermined values of said characteristics. A particular group of characteristics may be selected by the user resulting in a plurality of characteristics being modified simultaneously. When moving from one environment to another, it is therefore possible for a user to modify a plurality of operating characteristics simultaneously upon selection in a single menu.

Document WO 00/04730 A provides a method for implementing personalized location-based services in wireless networks. This method allows for a subscriber telephone to request a particular location-based service. Based on the subscribers current location as well as on the locations of various service providers, the system identify suitable candidate service providers. Then a subscriber profile is used to identify one or more appropriate service providers form the list of candidate service providers. The candidate service providers that are selected according to the subscriber profile are added to a menu provided to the subscriber. In response, the subscriber may select a service provider from said menu and send this selection to the system in order to indicate the desired service provider.

Document US 5,832,212 discloses a censoring browser method for internet viewing. This method includes storing a user profile comprising user selected censoring parameters. Upon browsing the internet according to this method, received data packets are compared with the user selected censoring parameters. Responsive to this comparison, the received data packet contents are processed and selectively displayed responsive to the user selected censoring parameters. Said user selected censoring parameters include words, words fragments, and categories that can be removed and selectively replaced with prettified characters or acceptable substitute words.

Therefore, the present invention addresses the problem of managing a plurality of contexts as defined above in a user friendly way.

This object is achieved by means of the features of the independent claims. The dependent claims develop further the central idea of the present invention.

According to the present invention therefore a method for managing user profile information is proposed. A plurality of contexts can be associated with a user, wherein a context is defined as a set of network communication front-end terminals associated with an environment (logical or geographical condition). According to the invention the history of used Contexts is stored, so that the user can later scroll the list of "visited" Contexts, select the desired one, and switch from the current Context to the selected one. Preferably only recently used contexts are stored. At least the historical first context can be a so-called home context which can be selected (accessed) directly without scrolling the following contexts.

According to a further aspect of the present invention a method for managing user profiles is proposed, according to which at least one context of a user is set (activated) as a home context such that the user can directly select (access) it.

At least one home context can be set as being a temporally home context.

A plurality of home contexts can be set, wherein each home context is associated with at least one condition.

One of the plurality of home contexts can be automatically activated on detection of the corresponding condition, wherein the condition can be related to time, location or situation.

A time stamp of the last update can be attributed to each context. Furthermore, a time stamp of the last update can be attributed to each front-end terminal of a context.

The context can be locally cached in a front-end terminal and/or stored on a user profile server.

In line with a retrieval of a context the associated time stamps of the version cached locally in the front-end terminal and the server, respectively, can be checked on consistency.

In case the consistency check of the time stamps shows a discrepancy, the server version takes precedence and the locally cached version is overwritten.

According to a still further aspect of the present invention a computer software program is proposed implementing a method as set forth above when loaded in the memory of a network computing device.

According to a still further aspect of the present invention a graphical user interface for managing user profiles is proposed, wherein the graphical user interface comprises a navigation bar for performing a method as set forth above.

Further aspects, features and objects of the present invention will become evident for the man skilled in the art when reading the following detailed explanations of embodiments of the present invention taken in conjunction with the figures of the enclosed drawings.
Figure 1 shows an example of a message service mutable environment,
Figure 2 shows a navigation bar according to the present invention,
Figure 3 shows a use case diagram,
Figure 4 shows the invention from an information view point,
Figure 5 shows the invention from a computational view point, and
Figure 6 shows a representation of the present invention according to an engineering view point.

The following description is made with reference to a user profile database used in connection with a so-called unified instant messaging system. It is, however, important to note that the user profile database concept can be applied to any kind of network service.

### Abbreviations

| | |
|---|---|
| ACTS | Advanced Telecommunication Technologies & Services |
| COTS | Commercial Off-The-Shelf |
| EGS | Entry Gateway Service |
| EGSS | Entry Gateway Service Server |
| EGSC | Entry Gateway Service Client |
| FS | Front-End Set |
| FST | Front-End Set Template |
| HW | Hardware |
| GUI | Graphical User Interface |
| IMB | Instant Message Broker |
| IP | Internet Protocol |
| ITU-T | International Telecommunication Union - Telecommunication |
| MASE | Mobile Application Support Environment |
| ODP | Open Distributed Processing |
| PDA | Personal Data Assistant |
| PSE | Personal Service Environment |
| SW | Software |
| UIM | Unified Instant Messaging |
| UML | Unified Modeling Language |
| UMTS | Universal Mobile Telecommunication System |

The following paragraphs describe the present invention following the ODP methodology (see f.e. Gordon Blair, J. Bernard Stefani, "Open Distributed Processing and Multimedia", Addison Wesley, ISBN 0-201-17794-3) as a guideline. More specifically, the five ODP viewpoints (listed below) are hereby used in an informal in way:
1. enterprise (purpose of the system, role in the Enterprise, boundaries of the system, use cases requirements from a customer perspective)
2. information (structure of the information managed by the system)
3. computational (system functionality)
4. engineering (mechanisms implementing the system functionality and providing distribution transparencies)
5. technology (technical solutions used for achieving the goals of the aforementioned viewpoints).

### Application example

IMB subscribers may need to be contacted anywhere, insofar as they can travel (i.e. being reachable different locations/offices), and/or they can reconfigure their set of available terminal devices at any given time.

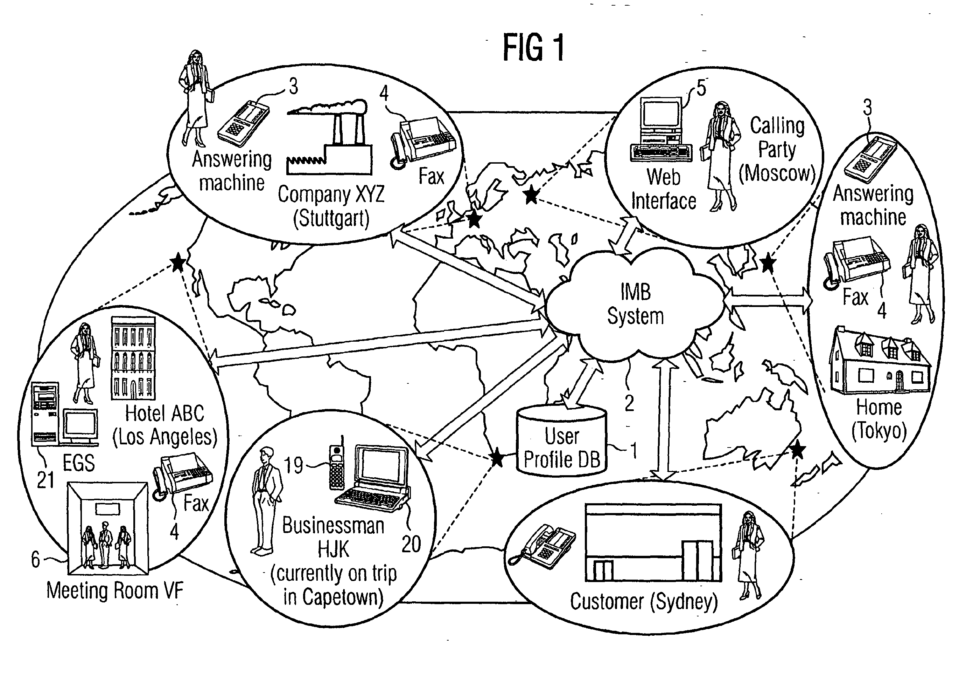

Figure 1 illustrates the simplest case of an IMB system.

A calling party located in Moscow tries to send an Instant Message to the businessman HJK (i.e. the called party), by connecting to the IMB system 2 through a web interface 5 (by using a PC with an Internet access). The calling party does not know where the businessman is currently located. All the calling party knows about the called party is the businessman's IMB subscriber name, e.g. imb://HJK@sony.de).

Based on the information stored in the (global) User Profile Database 1, the IMB system 2 resolves businessman's (i) Active Front-End Set and (ii) the current terminal device.

Once got such information, the IMB system 2 can finally forward the Instant Message (with the proper data format, as prescribed by the selected terminal device) to the called party.

The called party can move to different locations (e.g. he can be at Company XYZ in Stuttgart), and or to different situations (on trip - he can use only a mobile phone 19 and a laptop20 - or at home being equipped with an answering machine 3 and a fax 4). As a special case, the hotel ABC in Los Angeles can become a new home for the businessman, for a certain period of time. In the meanwhile the businessman would like to be reachable (through the IMB system) on his mobile phone, and not to receive Instant Messages at the hotel's published fax machine 4 (e.g. for privacy reasons). In order to do so, he has to customize the FST offered by the hotel EGS 21, by adding his mobile phone 19, and removing the hotel's fax machine 4. The hotel might furthermore offer the use of a meeting room 6.

An IMB subscriber may decide to switch back to one of the previously selected contexts, and yet have the possibility to undo this operation, either completely or partially (concept of history).

Furthermore, an IMB subscriber may wish to return at any time to the context referenced by the subscriber's default user profile (see EP 00 104 259.7). This home context can be considered as a PSE. Additionally, the IMB subscriber may want to change the home context so as to reference to another context from within said default user profile. This change can be manually or automatically done, the latter being based on the matching of configured information with the current conditions the user experiences.

For performance reasons, home context identity, context history, and context information can be locally cached on those front-ends, which are equipped with a secondary memory unit.

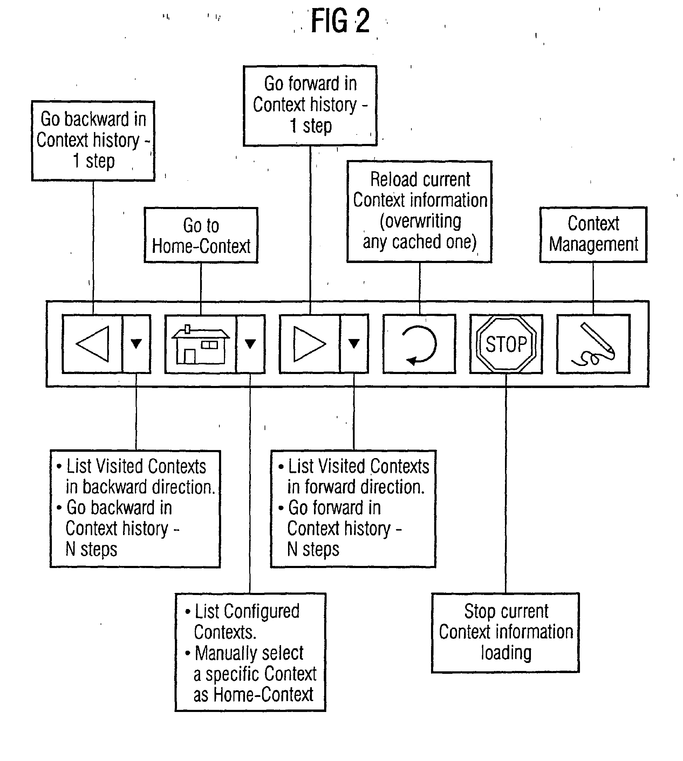

Figure 2 represents an example of "context navigation bar" of a graphical user interface, where all the functionality described in the previous sections are visually presented as a set of buttons. Some buttons are associated with a direct action (e.g. go backward one step), whereas others are associated with a drop-down menu, from which the user can select a specific function item.

The "context management" button is associated with a dialog window, where the user can perform of the following functionality:
- Create a new context
- Edit a context
- Delete a context
- Save/Save-As a context

Following standard GUI design guidelines, this functionality can be more appropriately mapped to file and edit menu items. Therefore in such a case, the "context management" button indicated in this figure can be omitted from said menu bar.

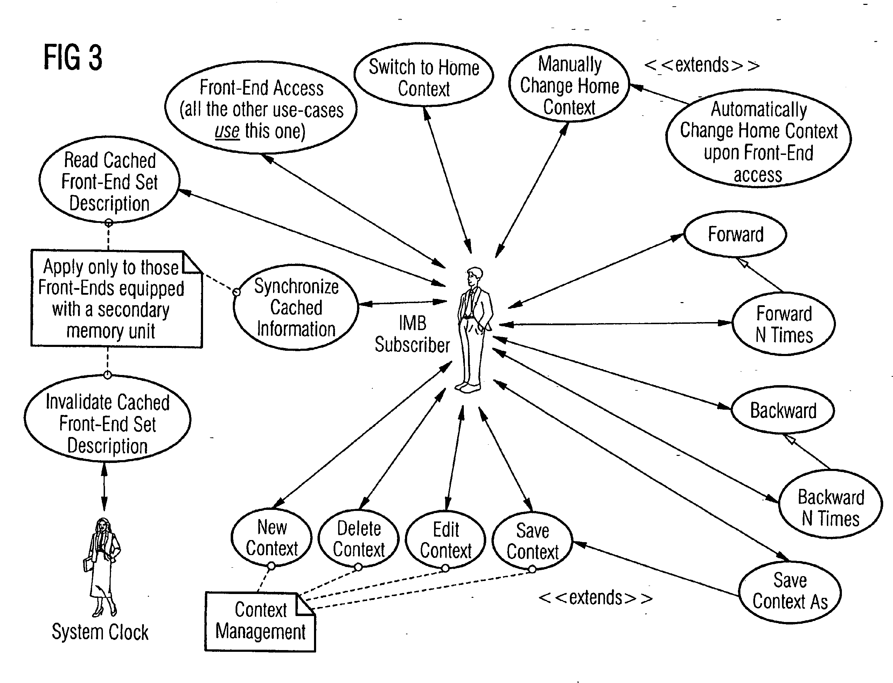

All the possible scenarios are summarized in the UML Use Case Diagram depicted in Figure 3.

### Sample Scenario

A businessman may have subscribed a Unified Instant Messaging service with an IMB Service Provider. At subscription time, he has entered his office phone and fax number, his cellular phone number, business e-mail address in a front-end Set, referenced by the so-called default user profile. At a later time, the businessman visits an exhibition in a foreign country, and there discovers an entry gateway server, which advertises a front-end set template the visitors can customize for redirecting messages to locally available shared terminals (e.g. a fax machine). This process can be iterated several times.

At the end of his business-trip, the businessman figures out that he has collected a series of customized contexts, which he might need to reuse in the next - of far future. In the former case, it would be convenient to scroll the list of recently "visited" contexts, for selecting the one he might need at a given moment in time. Furthermore, given that such a list could be quite large (and/or the initial context identity could be not easy to remember) the businessman may want to move directly to the default profile by simply selecting a home UI item (e.g. a button). Alternatively, he might find it useful to elect one of the "visited" front-end Sets as his temporary new home. Therefore, the businessman should be provided with the capability to change the context acting the home role.

Furthermore, the businessman may find convenient to have multiple home-contexts, each associated with a different set of conditions (e.g. the type of terminal used, location and/or situation, type of service and/ or application used, time/date). These home-contexts may be totally unrelated to one another, or derived each other following a specialization scheme as described in EP 00 104 259.7.

For instance, the businessman can configure his user space so that each time he uses his mobile phone in a given country, he gets a home-context reflecting local information. Whereas, while using a web interface (i.e. a COTS web-browser for accessing a given Internet portal), he gets automatically another home-context specialized for that different use case.

### The Home Concent

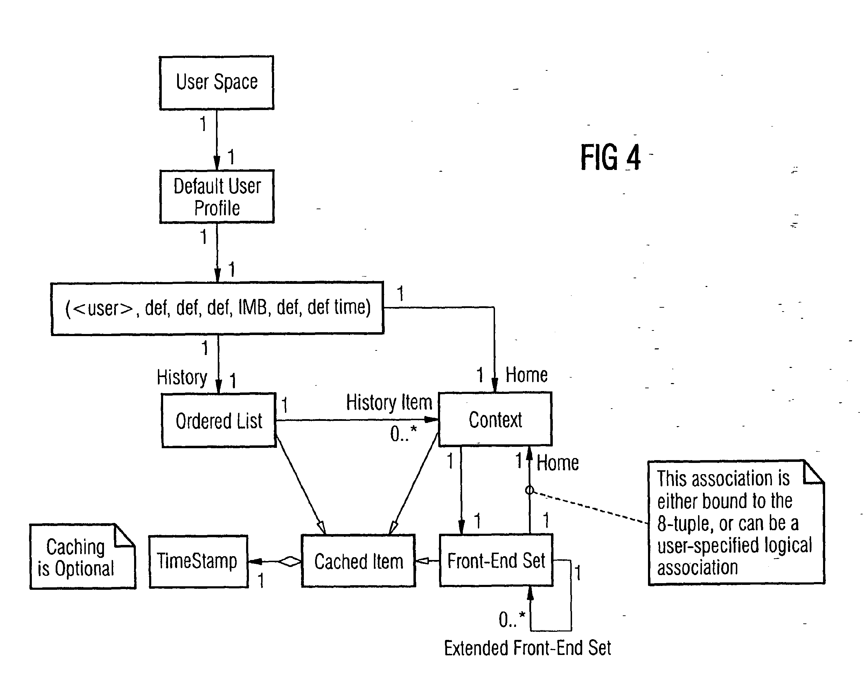

As shown in figure 4, each IMB subscriber is associated with a user space, which contains, among other information, the so-called default user profile, a (<user>, default, default, default, default, default, default) tuple containing user's personal information (see EP 00 104 259.7). Rooting by this, the (<user>, default, default, default, IMB, default, default) tuple expresses the user's general preferences, as for what IMB service concerns.

The 6-tuple (User, Terminal, Network, Application, Situation, Location) described in EP 00 104 259.7 is hereby augmented with an additional card name component type, i.e. the Service. The service is a general-purpose resource offered to a set of authorized subscribers. The service can be used directly by applications in a component model fashion, e.g. language translation applications running on top of the IMB service. The resulting 7-tuple is thus (User, Terminal, Network Service, Application, Situation, Location). Furthermore, the number of user space dimensions may be augmented by introducing yet another card name component type, the time/date field, which indicates relative time-windows that can be used to further specify the context. Therefore, the aforementioned tuple becomes a 8-tuple.

In such a tuple, one can easily introduce a new key-value pair, indicating the identity of the Context the user has elected as the one acting the home role.

### Multiple Home-Contexts

As aforementioned, the user may wish to configure not just one, but a multiplicity of home-contexts, each dealing with a specific set of conditions the user may face in a given moment.

To do so, the user may associate a context to a specific 8-tuple, and/or embed the notion of home context in a key-value pair associated with each front-end. The latter method allows users to freely configure contexts, based on some user-specified logical association, as compared to the former method.

### The History Concept

Furthermore, additional key-value pairs within the aforementioned tuple can contain the identities of those contexts recently visited. Contexts can be identified with a name (mnemonic).

The history information is thus stored within the system. Optionally, one can also store such information directly within a front-end, by using a local secondary memory unit, if any is available.

With the later approach, one gains in performance (i.e. no need to communicate with the IMB system for examining the history), whereas the former approach provides users with global history information. This means that one can use the history from different front-ends at different times.

### Cached Context Information

Caching of context information can be achieved at the terminal side on a secondary memory unit, if any is available. With this approach, one gains in performance (i.e. no need to communicate with the IMB system for examining the history and downloading the context content).

### Computational Viewpoint

The IMB subscriber can use a user interface for accessing the following functionality:
1. Home Management Client Unit:
   1.1. Switch to home front-end set
   1.2. Change home front-end set
      1.2.1. Manually
      1.2.2. Automatically, upon front-end access (i.e. during login phase when accessing an internet portal, offering IMB services), based on the current context
2. History Management Client Unit
   2.1. Switch to next context in the forward history direction
   2.2. Switch to next context in the backward history direction
   2.3. Switch to the N-th next context in the forward history direction
   2.4. Switch to the N-th next context in the backward history direction
   2.5. History pruning: this is a special case of history management, used for forcing cache updates
3. Caching policy and cache controller units (optional)
   3.1. Retrieve from cache the description of the selected context
   3.2. Cache aging policy

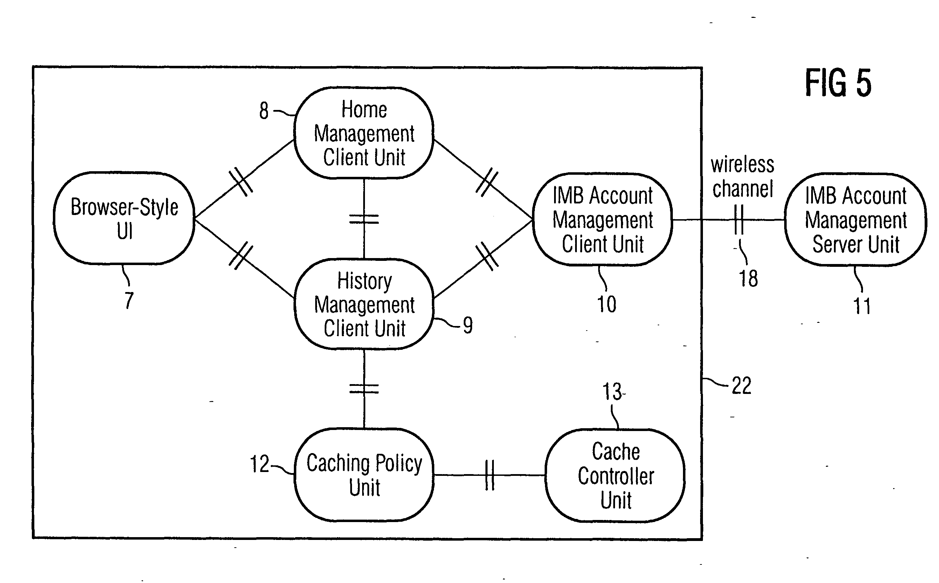

Each front-end shall be equipped with client units, which forward the aforementioned UI commands to either a local secondary memory controller unit (in the case of the caching mechanism), or to the IMB account management system, as described in EP 00 104 259.7 (see figure 5):

Following the ODP graphical notation and terminology (Gordon Blair, J. Bernard Stefani, "Open Distributed Processing and Multimedia", Addison Wesley, ISBN 0-201-17794-3), in figure 5 circles indicate logical computational objects, rounded-angle boxes stand for connection abstractions, and double crossed arcs represent the interfaces between objects.

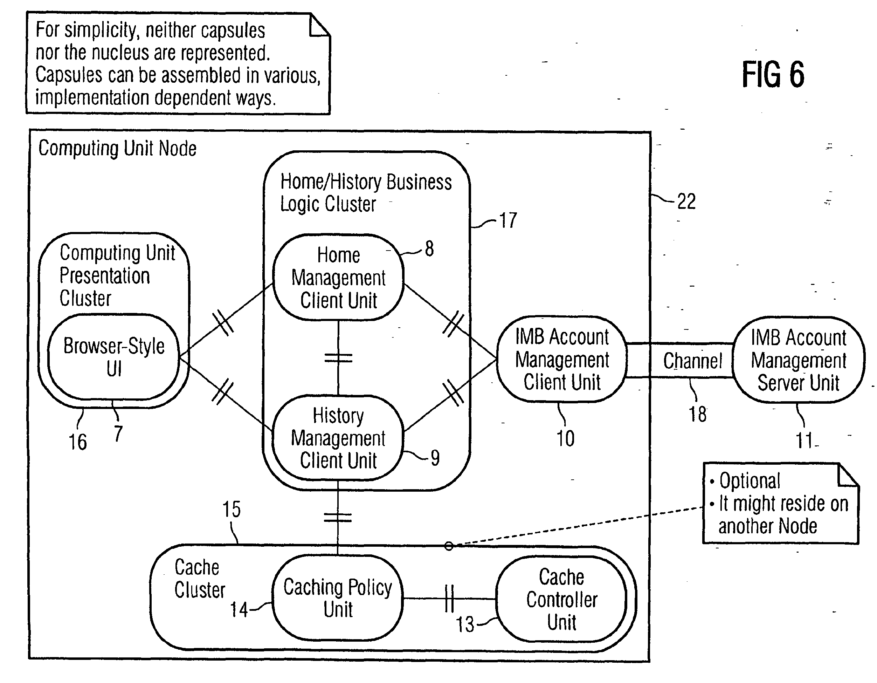

On the side of the client 22, an IMB account management client unit 10 communicates by means of a wireless channel 18 with a IMB Management server unit 11. The IMB account management client unit 10 is logically connected with a home management client unit 8 and a history management client unit 9. The history management client unit 9 is logically connected to a caching policy unit 12 and a cache controller unit 13 (see figure 6 for further explanation). The history management client unit 9and the home management client unit 8 are respectively connected to a browser-style user interface 7.

The front-end (client) 22 itself shall enforce a proper cache aging policy by means of a caching policy unit 12. Each context shall in fact contain a timestamp indicating the date of the last update of the Front-End Set and/or other preference information, in the User Profile Database 1. Whenever navigating through the history, before switching to the selected context, consistency checks between the selected cached information and the corresponding information stored in the User Profile Database shall be performed, based on said timestamps. The timestamps of the contexts contained in the given cached context shall coincide with the timestamps of the corresponding official versions, as contained in the user profile database. Whenever a discrepancy occurs, the cached version is overwritten with the database version, which takes precedence.

In order to improve performance, this mechanism can be exploited even at a lower level: one can tag with a timestamp not only a whole context, but also each front-end listed in the front-end set contained in said context. In this way, only cache updates at front-end level within a context would take place, as opposed to a whole context update.

### Engineering Viewpoint

Internally, the computing unit comprises a set of units, each managing a specific task (see figure 6):

| Unit Name | Unit Description |
|---|---|
| Browser-Style UI Unit 7 | Provides a man-machine interface similar to a web-browser, with the concept of backward (even with multiplicity greater than one), forward (even with multiplicity greater than one), refresh, go to home context, change home context, history pruning. |
| Home Management Client Unit 8 | Used to: |
| | 1. Set the home context as the active one |
| | 2. Change home context |
| History Management Client Unit 9 | 1 . Switch to next context in the forward history direction |
| | 2. Switch to next context in the backward history direction |
| | 3. Switch to the n-th next context in the forward history direction |
| | 4. Switch to the n-th next context in the backward history direction |
| | 5. History pruning |
| | 6. Co-ordinates cache mechanisms (if cache supported) |
| IMB Account Management Client Unit 10 | see EP 00 104 259.7 |
| IMB Account Management Server Unit 11 | see EP 00 104 259.7 |
| Caching Policy Unit 14 | 1. Check timestamp - aging policy |
| | 2. Co-ordinates cache insertion and deletion |
| | 3. Co-ordinates cache retrieval |
| Cache Controller Unit 13 | 1. Cache insertion and deletion |
| | 2. Cache retrieval |

In figure 6, following the ODP graphical notation and terminology, circles indicate physical basic engineering objects (i.e. the SW sub-Units, which the System is composed of). Rounded-angle boxes represent clusters (i.e. a set of closely related basic engineering objects grouped into a single memory address space). The grey-coloured rectangles represent physical channels, which abstract inter-cluster communications. These communications may span SW processes (through IPC mechanisms provided by the underlying OS) or HW devices (through networking). The nucleus represents, in ODP terminology, the underlying OS. Double stroked arcs represent the interfaces among the various objects.

At this level, no physical distribution of clusters among SW memory address spaces (also known as processes or, in ODP terminology, capsules) is hereby presented, since the hereby described architecture is quite modular.

The Home and History Management Client Units' counterparts at the server level are embedded into the IMB Account Management Server Unit, as additional operations supported by said unit. The exceptions being:
1. The information schema represented in Figure 4.
2. Any Front-End Set creation/update is associated with a corresponding *timestamp*. In such occasions, the IMB Account Management Server Unit shall thus insert a timestamp in each Front-End / Context.

### Technology Viewpoint

This invention articulates in a set of units, which can be fully implemented as software units (SW components).

It is advantageous that the SW units feature a platform-independent nature, given that the IMB architecture is open to any possible HW/SW implementation of its internal components and of the Front-Ends.

It is advantageous that the units are easily deployable (possibly over a telecommunication network, e.g. over the Internet) and easily (re)configurable. It is advantageous that the units can be downloaded installed or upgraded over the network.

For these and many other reasons, it is advantageous the use of the Java-based MASE middle-ware as the intermediate platform of choice. In such a context, the units above described are de facto MASE components. As such, each unit provides an API specification, and its implementation.

### The main advantageous differences between the invention and the state of the art

Compared to the state of the art this invention allows the selection of more than one terminal, by providing the possibility to select a whole Context (which means Front-End Sets and other user preferences). The user profile extensibility mechanism described in EP 00 104 259.7 further allows the possibility to refer to other default front-end sets.

This invention also offers the possibility to either manually or automatically selecting the home Context. In the latter case, the selection can be based on various criteria (i.e. the components of aforementioned User Profile Database 8-tuple). The user has the option of either directly selecting the context based on such criteria, or using an indirection scheme, where the desired home Context is identified as a key-value pair property contained within the given current 8-tuple. The latter mode offers the user the possibility to create custom, logical home contexts, thus extending the selection criteria offered by the 7-tuple components.

Therefore, the user has the possibility to eventually configure a plurality of contexts as home context by simply associating each of them with a different set of conditions.

Furthermore, the navigation mechanisms of currently available COTS web-browser is limited to web-pages whereas this invention uses the underlying navigation concept for efficiently retrieving cached database query results in a way that leverages the User Profile Database structure described in EP 00 104 259.7.

In particular, the history information is available globally, being this stored in the user's default profile, which can be accessed from a plurality of Front-Ends and telecommunication networks.

The hereby presented the multiple-home concept can be introduced into existing web browsers, thus enabling the user to either manually (see Figure 2) or automatically select her/his home page, out of set of configured ones.

## Claims

1. Method for managing user profile information,
comprising associating a plurality of contexts with a user, a context being a set of network resources (3, 4, 5, 6, 19, 20), associated with given environment and/or logical conditions, and
storing (1, 15) the contexts used by the user,
wherein the user scrolls the list of used contexts, selects the desired one and switches his associated context from the current context to the selected one.

2. Method according to claim 1,
**characterized in that** only recently used contexts are stored (1, 15).

3. Method according to claim 1 or 2,
**characterized in that** at least the historically first context is selected directly without scrolling.

4. Method for managing user profiles,
comprising associating a plurality of contexts with a user, a context being a set of network resources (3, 4, 5, 6, 19, 20) associated with given environment and/or logical conditions, wherein at least one context of a user is selected directly as a home context.

5. Method according to claim 4,
**characterized in that** at least one home context is set as being the currently active home context.

6. Method according to claim 4 or 5,
**characterized in that**
a plurality of home contexts is set, wherein each home context is associated with at least one condition.

7. Method according to claim 6,
**characterized in that**
one of the plurality of home contexts is automatically activated on detection of the corresponding condition.

8. Method according to claim 6 or 7,
**characterized in that**
the condition is related to a given combination of time, location, situation.

9. Method according to anyone of the preceding claims,
**characterized in that**
a timestamp of the last update is attributed to each context.

10. Method according to anyone of the preceding claims,
**characterized in that**
a timestamp of the last update is attributed to each front-end terminal (3, 4, 5, 6, 19, 20) of a context.

11. Method according to anyone of the preceding claims,
**characterized in that**
the recently used contexts and associated timestamps are locally cached (15) in a front-end terminal (3, 4, 5, 6, 19, 20).

12. Method according to anyone of the preceding claims,
**characterized in that**
the contexts and associated timestamps are stored on a user profile server (1).

13. Method according to claim 12,
**characterized in that**
in line with a retrieval of a context the associated timestamps of the version cached (15) locally in the front-end terminal (3, 4, 5, 6) and the server (1), respectively, are checked on consistency.

14. Method according to claim 13,
**characterized in that**
in case the consistency check of the timestamps shows a discrepancy, the server (1) version takes precedence and the locally cached (15) version is overwritten.

15. Computer software program,
**characterized in that**
it implements a method according to anyone of the preceding claims when loaded in the memory of a network computing device.

16. Graphical user interface for managing user profiles,
**characterized in that**
it (7) comprises a navigation bar for performing a method according to anyone of claims 1 to 13.

## Patentansprüche

1. Verfahren zum Managen von Benutzerprofilinformationen, umfassend ein Zuordnen von mehreren Kontexten zu einem Benutzer, wobei ein Kontext einer Menge von Netzwerkressourcen (3, 4, 5, 6, 19, 20) entspricht, die einer bestimmten Umgebung und/oder logischen Bedingungen zugeordnet sind, und
ein Speichern (1, 15) der Kontexte, die durch den Benutzer benutzt werden,
wobei der Benutzer die Liste der benutzten Kontexte scrollt, den gewünschten auswählt und seinen zugeordneten Kontext von dem aktuellen Kontext zu dem ausgewählten umschaltet.

2. Verfahren nach Anspruch 1, **dadurch gekennzeichnet, dass** nur kürzlich verwendete Kontexte gespeichert werden (1, 15).

3. Verfahren nach Anspruch 1 oder 2, **dadurch gekennzeichnet, dass** zumindest der historisch erste Kontext direkt ohne Scrollen ausgewählt wird.

4. Verfahren zum Managen von Benutzerprofilen, das das Zuordnen von mehreren Kontexten zu einem Benutzer umfasst, wobei ein Kontext einer Menge von Netzwerkressourcen (3, 4, 5, 6, 19, 20) entspricht, die einer bestimmten Umgebung und/oder logischen Bedingungen zugeordnet sind, wobei mindestens ein Kontext eines Benutzers direkt als ein Heimatkontext ausgewählt wird.

5. Verfahren nach Anspruch 4, **dadurch gekennzeichnet, dass** mindestens ein Heimatkontext als der momentan aktive Heimatkontext festgelegt wird.

6. Verfahren nach Anspruch 4 oder 5, **dadurch gekennzeichnet, dass** mehrere Heimatkontexte festgelegt werden, wobei jeder Heimatkontext mindestens einer Bedingung zugeordnet ist.

7. Verfahren nach Anspruch 6, **dadurch gekennzeichnet, dass** einer der mehreren Heimatkontexte automatisch bei der Detektion der entsprechenden Bedingung aktiviert wird.

8. Verfahren nach Anspruch 6 oder 7, **dadurch gekennzeichnet, dass** die Bedingung sich auf eine bestimmten Kombination von Zeit, Ort und Situation bezieht.

9. Verfahren nach einem der vorangehenden Ansprüche, **dadurch gekennzeichnet, dass** ein Zeitstempel der letzten Aktualisierung jedem Kontext zugeordnet ist.

10. Verfahren nach einem der vorangehenden Ansprüche, **dadurch gekennzeichnet, dass** ein Zeitstempel der letzten Aktualisierung als Attribut jedem Frontend-Endgerät (3, 4, 5, 6, 19, 20) eines Kontext zugeordnet ist.

11. Verfahren nach einem der vorangehenden Ansprüche, **dadurch gekennzeichnet, dass** die kürzlich verwendeten Kontexte und die zugeordneten Zeitstempel in einem Frontend-Endgerät (3, 4, 5, 6, 19, 20) in einem lokalen Cache zwischengespeichert werden.

12. Verfahren nach einem der vorangehenden Ansprüche, **dadurch gekennzeichnet, dass** die Kontexte und die zugeordneten Zeitstempel auf einem Benutzerprofilserver (1) gespeichert werden.

13. Verfahren nach Anspruch 12, **dadurch gekennzeichnet, dass** in Einklang mit einem Abrufen eines Kontext die zugeordneten Zeitstempel der Version, die lokal (15) in dem Frontendgerät (3, 4, 5, 6) bzw. dem Server (1) in einem lokalen Cache zwischengespeichert werden, auf Konsistenz überprüft werden.

14. Verfahren nach Anspruch 13, **dadurch gekennzeichnet, dass** in einem Fall, bei dem die Konsistenzüberprüfung der Zeitstempel eine Diskrepanzzeit zeigt, die Server- (1) Version die Priorität übernimmt und die in dem lokalen Cache zwischengespeicherte (15) Version überschrieben wird.

15. Computersoftwareprogramm, **dadurch gekennzeichnet, dass** es ein Verfahren gemäß einem der vorangehenden Ansprüche implementiert, wenn es in den Speicher einer Netzwerkcomputervorrichtung geladen wird.

16. Grafische Benutzerschnittstelle zum Managen von Benutzerprofilen, **dadurch gekennzeichnet, dass** sie (7) eine Navigationsleiste zum Durchführen eines Verfahrens gemäß einem der Ansprüche 1 bis 13 umfasst.

## Revendications

1. Procédé pour gérer une information de profil d'utilisateur, comprenant :
l'association d'une pluralité de contextes avec un utilisateur, un contexte étant un jeu de ressources de réseau (3, 4, 5, 6, 19, 20) associé à des conditions d'environnement et/ou logiques données ; et
le stockage (1, 15) des contextes utilisés par l'utilisateur,
dans lequel l'utilisateur défile la liste de contextes utilisés, sélectionne celui souhaité et commute son contexte associé depuis le contexte courant sur celui sélectionné.

2. Procédé selon la revendication 1, **caractérisé en ce que** seulement des contextes utilisés récemment sont stockés (1, 15).

3. Procédé selon la revendication 1 ou 2, **caractérisé en ce qu'**au moins le premier contexte historiquement est sélectionné directement sans défilement.

4. Procédé pour gérer des profils d'utilisateur, comprenant l'association d'une pluralité de contextes avec un utilisateur, un contexte étant un jeu de ressources de réseau (3, 4, 5, 6, 19, 20) associé à des conditions d'environnement et/ou logiques données, dans lequel au moins un contexte d'un utilisateur est sélectionné directement en tant que contexte domestique.

5. Procédé selon la revendication 4, **caractérisé en ce qu'**au moins un contexte domestique est établi comme étant le contexte domestique présentement actif.

6. Procédé selon la revendication 4 ou 5, **caractérisé en ce qu'**une pluralité de contextes domestiques sont établis, dans lequel chaque contexte domestique est associé à au moins une condition.

7. Procédé selon la revendication 6, **caractérisé en ce que** l'un de la pluralité de contextes domestiques est automatiquement activé lors de la détection de la condition correspondante.

8. Procédé selon la revendication 6 ou 7, **caractérisé en ce que** la condition est rapportée à une combinaison donnée de temps, de localisation et de situation.

9. Procédé selon l'une quelconque des revendications précédentes, **caractérisé en ce qu'**un timbre temporel de la dernière mise à jour est attribué à chaque contexte.

10. Procédé selon l'une quelconque des revendications précédentes, **caractérisé en ce qu'**un timbre temporel de la dernière mise à jour est attribué à chaque terminal d'extrémité avant (3, 4, 5, 6, 19, 20) d'un contexte.

11. Procédé selon l'une quelconque des revendications précédentes, **caractérisé en ce que** les contextes récemment utilisés et les timbres temporels associés sont mis en cache localement (15) dans un terminal d'extrémité avant (3, 4, 5, 6, 19, 20).

12. Procédé selon l'une quelconque des revendications précédentes, **caractérisé en ce que** les contextes et les timbres temporels associés sont stockés sur un serveur de profil d'utilisateur (1).

13. Procédé selon la revendication 12, **caractérisé en ce que**, en ligne avec une recherche d'un contexte, les timbres temporels associés de la version mise en cache (15) localement respectivement dans le terminal d'extrémité avant (3, 4, 5, 6) et le serveur (1) sont vérifiés en termes de cohérence.

14. Procédé selon la revendication 13, **caractérisé en ce que**, dans le cas où la vérification de cohérence des timbres temporels présente une discordance, la version du serveur (1) prend la préséance et la version en cache localement (15) est sur-écrite.

15. Programme de logiciel d'ordinateur, **caractérisé en ce qu'**il met en oeuvre un procédé selon l'une quelconque des revendications précédentes lorsqu'il est chargé dans la mémoire d'un dispositif de calcul de réseau.

16. Interface d'utilisateur graphique pour gérer des profils d'utilisateur, **caractérisée en ce qu'**elle (7) comprend une barre de navigation pour réaliser un procédé selon l'une quelconque des revendications 1 à 13.
